# EUROPÄISCHE PATENTSCHRIFT

(11) **EP 2 742 222 B1**
(45) Veröffentlichungstag und Bekanntmachung des Hinweises auf die Patenterteilung: **27.04.2016**
(21) Anmeldenummer: 12756388.0
(22) Anmeldetag: 08.08.2012
(51) Int. Cl.: F02C 6/12, F01D 9/02, F01D 25/24

(54) **Anordnung für ein Leiten eines Abgases in einer axial angeströmten Abgasturbine**
Arrangement for routing an exhaust gas in an axial-flow exhaust gas turbine
Système pour un guidage des gaz d'échappement dans une turbine à gaz d'échappement à afflux axial

(30) Priorität: 08.08.2011 DE 102011080596
(43) Veröffentlichungstag der Anmeldung: 18.06.2014
(73) Patentinhaber: ABB Turbo Systems AG, 5400 Baden (CH)
(72) Erfinder: DI PIETRO, Marco, CH-4665 Oftringen (CH); JARUSEL, Matthias, 79774 Albbruck (DE)
(74) Vertreter: ABB Patent Attorneys
(86) Internationale Anmeldenummer: PCT/EP2012/065486
(87) Internationale Veröffentlichungsnummer: WO 2013/020991

(56) Entgegenhaltungen:
- WO-A2-2006/134222
- DE-A1- 19 651 318
- DE-A1-102004 061 030
- DE-A1-102005 027 890
- DE-A1-102009 030 042
- US-A- 4 548 040

## Beschreibung

### TECHNISCHES GEBIET

Die Erfindung bezieht sich auf das Gebiet axial angeströmter Abgasturbinen. Sie betrifft eine Anordnung für ein Leiten eines Abgases in einer axial angeströmten Abgasturbine, wobei die Anordnung einen Düsenring mit Leitschaufeln und ein inneres Gaseintrittsgehäuse umfasst.

### STAND DER TECHNIK

Abgasturbinen werden vor allem in Nutzturbinen und in Abgasturboladern verwendet. Abgase einer Verbrennungsmaschine werden der Abgasturbine zugeführt. Weil diese Abgase unvollständig expandiert sind, ist die noch vorhandene Energie der Abgase teilweise in Rotationsenergie der Abgasturbine umwandelbar. Bei einer axial angeströmten Abgasturbine werden die Abgase durch ein äusseres Gaseintrittsgehäuse axial auf ein im Gaseintrittsgehäuse positioniertes und drehbar gelagertes Turbinenrad geleitet.

Das Turbinenrad umfasst einen Nabenkörper und auf dem Nabenkörper befestigte Laufschaufeln, an welchen die Abgasströmung Arbeit verrichtet und so die Energie der Abgase teilweise in Rotationsenergie des Turbinenrades umwandelt. Damit sich in Strömungsrichtung vor dem Nabenkörper kein Staubereich der Abgasströmung ausbildet, ist ein inneres Gaseintrittsgehäuse axial in Strömungsrichtung vor dem Nabenkörper konzentrisch angeordnet. Dadurch wird die rohrförmige Abgasströmung in eine ringrohrförmige Abgasströmung effizient transformiert. In dem Moment der Transformation ist die Abgasströmung besonders anfällig auf Störungen in dem Strömungskanal der Abgasturbine.

DE 19651318 beschreibt ein inneres Gaseintrittsgehäuse, welches über zumindest eine in dem Strömungskanal ausgebildete Rippe mit dem äußeren Gaseintrittsgehäuse verbunden ist. Durch die in dem Strömungskanal ausgebildete Rippe wird die Abgasströmung negativ beeinflusst. Ein weiteres Problem sind hohe thermische Spannungen beim Anfahren der Verbrennungsmaschine zwischen der Rippe und dem inneren Gaseintrittgehäuse sowie der Rippe und dem äusseren Gaseintrittsgehäuse. Ähnliche Lösungen mit einer in dem Strömungskanal ausgebildete Rippe werden ebenfalls in DE 4014976, CH 269300, US 7921646, EP 0191380 und US 3778194 beschrieben.

### DARSTELLUNG DER ERFINDUNG

Aufgabe der vorliegenden Erfindung ist es, ein inneres Gaseintrittgehäuse, bei welchem die negative Beeinflussung der Abgasströmung vermindern ist, zur Verfügung zu stellen.

Diese Aufgabe wird durch eine Anordnung für ein Leiten eines Abgases in einer axial angeströmten Abgasturbine, welche einen Düsenring mit Leitschaufeln, ein äusseres Gaseintrittsgehäuse und ein inneres Gaseintrittsgehäuse umfasst, mit den Merkmalen des Patentanspruches 1 gelöst. Bevorzugte Ausführungsformen sind Gegenstand der abhängigen Patentansprüche.

Gegenstand der Erfindung ist es, dass das innere Gaseintrittgehäuse, welches auch als Kalotte oder Abdeckung der Nabe des Turbinenrades bezeichnet werden kann, durch eine tragende Verbindung mit dem Düsenring in einer Abgasströmung positioniert ist. Durch die tragende Verbindung mit dem Düsenring weist das innere Gaseintrittsgehäuse keine zusätzliche Abstützung auf, die die Abgasströmung in dem Strömungskanal der Abgasturbine beeinflusst.

Eine erste bevorzugte Ausführungsform betrifft eine formschlüssige Verbindung zwischen dem inneren Gaseintrittsgehäuse und dem Düsenring. Das heisst, dass zwischen dem inneren Gaseintrittsgehäuse und dem Düsenring irgendeine Form von Hinterschneidung besteht so, dass Teilkonturen der beiden Teile ineinandergreifen und bei Belastung der Verbindung Flächenpressungen auf den Teilkonturen auftreten. Dies ermöglicht ein schnelles Montieren und Demontieren des inneren Gaseintrittsgehäuses.

Eine weitere vorteilhafte Ausführungsform betrifft eine reibschlüssige Verbindung zwischen dem inneren Gaseintrittsgehäuse und dem Düsenring, welche auch als kraftschlüssige Verbindung bezeichnet werden kann, wie etwa eine Klemm- oder Pressverbindung. Dies ermöglicht eine einfache Verbindung zwischen dem Gaseintrittsgehäuse und dem Düsenring.

Eine weitere vorteilhafte Ausführungsform betrifft eine einstückige Anordnung aus einem Düsenring und einem inneren Gaseintrittsgehäuse. Die Integration des Düsenringes und des inneren Gaseintrittsgehäuses ermöglicht eine leichte Anordnung und eine kostengünstige Fertigung.

### KURZE BESCHREIBUNG DER FIGUREN

Nachfolgend wird die Erfindung anhand von Ausführungsbeispielen im Zusammenhang mit den Figuren näher erläutert. Die Figuren zeigen einen Axialschnitt:
- Figur 1: einer axial angeströmten Abgasturbine mit einer Verschraubung zwischen einem Düsenring und einem inneren Gaseintrittgehäuse;
- Figur 2: eine Anordnung mit einer Schweissverbindung zwischen einem Düsenring und einem inneren Gaseintrittgehäuse;
- Figur 3: eine einstückige Anordnung aus einem Düsenring und einem inneren Gaseintrittgehäuse.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

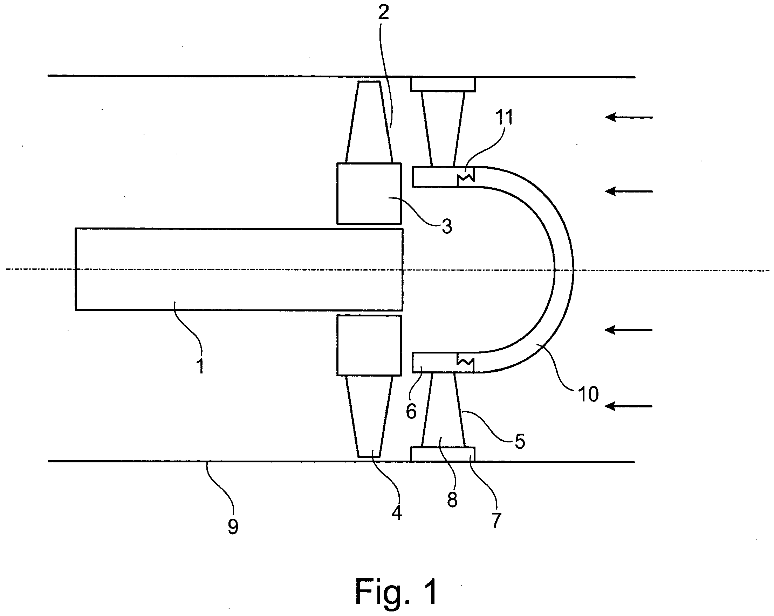

Fig. 1 zeigt eine axial angeströmte Abgasturbine in einer schematischen Darstellung eines Axialschnitts. Die Abgasturbine ist nach aussen hin durch ein äusseres Gaseintrittsgehäuse 9, welches rohrförmig ist, begrenzt. Ein Turbinenrad 2 ist konzentrisch innerhalb des äusseren Gaseintrittsgehäuses 9 angeordnet und ist durch eine Turbinenradwelle 1 drehbar gelagert. Das Turbinenrad 2 weist einen Nabenkörper 3 und Laufschaufeln 4 auf. Axial um die Turbinenradwelle 1 herum ist der zylinderförmige Nabenkörper 3 angeordnet. Auf der äusseren Mantelfläche des Nabenkörpers 3 sind die Laufschaufeln 4 befestig und in Umfangsrichtung verteilt. Um ein kollisionsfreies Drehen des Turbinenrades 2 zu gewährleisten, sind die Längen der Laufschaufeln 4 so bemessen, dass ein Spalt zwischen radial aussen liegenden Enden der Laufschaufeln 4 und dem äusseren Gaseintrittgehäuse existiert. In Strömungsrichtung vor dem Turbinenrad 2 befindet sich ein Düsenring 5. Dieser Düsenring 5 weist einen Innenring 6, einen Aussenring 7 und Leitschaufeln 8 auf. Der Düsenring 5 ist am Aussenring 7 mit dem äusseren Gaseintrittsgehäuse 9 verbunden. Die Leitschaufeln 8 sind zwischen dem Innenring 6 und dem Aussenring 7 angeordnet. Ein inneres Gaseintrittsgehäuse 10, welches sich in Strömungsrichtung vor dem Turbinenrad 2 und innerhalb des äusseren Gaseintrittsgehäuses 9 befindet, bildet zusammen mit dem äusseren Gaseintrittsgehäuse einen Strömungskanal, in welchem Strömungskanal die Strömung von einer Rohrströmung in eine hohlzylinderförmige Strömung überführt wird. Das innere Gaseintrittsgehäuse 10 ist gemäss einer ersten erfindungsgemässen Ausführungsform mit dem Innenring 6 des Düsenringes 5 über einer Schraubverbindung 11 verbunden.

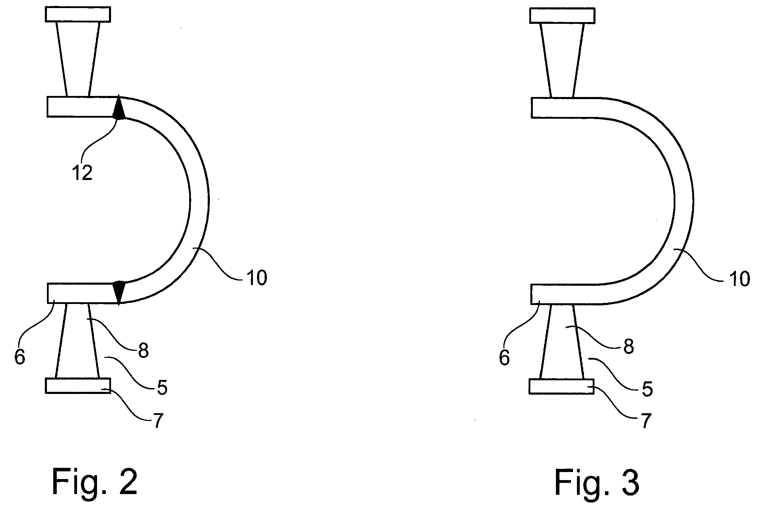

Fig. 2 zeigt eine Anordnung mit dem Düsenring 5 und dem inneren Gaseintrittgehäuse in einer schematischen Darstellung eines Axialschnitts. Das innere Gaseintrittsgehäuse 10 ist gemäss einer zweiten erfindungsgemässen Ausführungsform mit dem Innenring 6 über eine Schweissverbindung 12 verbunden.
Fig. 3 zeigt eine einstückige Anordnung mit dem Düsenring 5 und dem inneren Gaseintrittgehäuse in einem Axialschnitt. Der Düsenring 5 und das innere Gaseintrittsgehäuse 10 sind gemäss einer dritten erfindungsgemässen Ausführungsform aus einem Teil gefertigt, beispielsweise durch Giessen oder Fräsen.

Die Form des inneren Gaseintrittsgehäuses 10 kann von der in den Fig. 1 bis 3 dargestellten halbkugelförmigen Gestaltung abweichen. Es sind sämtliche fluiddynamisch sinnvollen Freiformen als Form für das innere Gaseintrittsgehäuse denkbar. Auch der Düsenring 5 muss nicht einen Innenring 6 oder einen Aussenring 7 aufweisen, solange die Leitschaufeln 8 in dem Strömungskanal der Abgasturbine positioniert sind und das innere Gaseintrittsgehäuse 10 radial innen von dem Strömungskanal tragend verbunden ist, wie etwa bei einem direkten Verschweissen der einzelnen Leitschaufeln 8 mit dem äusseren Gaseintrittsgehäuse 9 und dem inneren Gaseintrittsgehäuse 10. Das innere Gaseintrittsgehäuse 10 muss nicht mit am Innenring 6 mit dem Düsenring 5 tragend verbunden sein. Es kann auch direkt mit den radial innen liegenden Enden der Leitschaufeln 8 oder mit anderen radial innen von dem Strömungskanal befindlichen Teilen des Düsenringes 5 verbunden sein. Für die Art der Verbindung zwischen dem inneren Gaseintrittsgehäuse 10 und dem Düsenring 5 sind nicht nur stoffschlüssige und formschlüssige Verbindungen sondern auch kraftschlüssige Verbindungen wie beispielsweise durch ein Aufschrumpfen möglich.

### BEZUGSZEICHENLISTE

- 1: Turbinenradwelle
- 2: Turbinenrad
- 3: Nabenkörper
- 4: Laufschaufel
- 5: Düsenring
- 6: Innenring des Düsenringes
- 7: Aussenring des Düsenringes
- 8: Leitschaufel
- 9: äussere Gaseintrittsgehäuse
- 10: innere Gaseintrittsgehäuse
- 11: Schraubverbindung
- 12: Schweissverbindung

## Patentansprüche

1. Abgasturbine umfassend einen Düsenring (5) mit Leitschaufeln (8), ein äusseres Gaseintrittsgehäuse (9) und ein inneres Gaseintrittsgehäuse (10), wobei der Düsenring (5) relativ zum äusseren Gaseintrittsgehäuse (9) unabhängig von dem inneren Gaseintrittsgehäuse (10) fixiert ist, **dadurch gekennzeichnet, dass** der Düsenring _(5) mit dem inneren Gaseintrittsgehäuse (10) tragend verbunden ist und so das innere Gaseintrittsgehäuse (10) relativ zu dem äusseren Gaseintrittsgehäuse (9) über den Düsenring (5) fixiert ist.

2. Abgasturbine nach Anspruch 1, **dadurch gekennzeichnet, dass** der Düsenring (5) mit dem inneren Gaseintrittsgehäuse (10) über eine formschlüssige Verbindung tragend verbunden ist.

3. Abgasturbine nach Anspruch 2, **dadurch gekennzeichnet, dass** der Düsenring (5) mit dem inneren Gaseintrittsgehäuse (10) über eine Schraubenverbindung (11) tragend verbunden ist.

4. Abgasturbine nach Anspruch 1, **dadurch gekennzeichnet, dass** der Düsenring (5) mit dem inneren Gaseintrittsgehäuse (10) über eine stoffschlüssige Verbindung tragend verbunden ist.

5. Abgasturbine nach Anspruch 4, **dadurch gekennzeichnet, dass** der Düsenring (5) mit dem inneren Gaseintrittsgehäuse (10) über eine Schweissverbindung (12) tragend verbunden ist.

6. Abgasturbine nach Anspruch 1, **dadurch gekennzeichnet, dass** der Düsenring (5) mit dem inneren Gaseintrittsgehäuse (10) über eine reibschlüssige Verbindung tragend verbunden ist.

7. Abgasturbine nach Anspruch 1, **dadurch gekennzeichnet, dass** der Düsenring (5) und das innere Gaseintrittsgehäuse (10) einstückig ausgebildet sind.

8. Abgasturbine nach Anspruch 7, **dadurch gekennzeichnet, dass** der Düsenring (5) und das innere Gaseintrittsgehäuse (10) einstückig gegossen sind.

9. Turbolader mit einer Abgasturbine nach einem der Ansprüche 1 bis 8 bilden.

10. Nutzturbine mit einer Abgasturbine nach einem der Ansprüche 1 bis 8 bilden.

## Claims

1. Exhaust gas turbine comprising a nozzle ring (5) having guide vanes (8), an outer gas inlet casing (9) and an inner gas inlet casing (10), wherein the nozzle ring (5) is fixed relative to the outer gas inlet casing (9) independently of the inner gas inlet casing (10), **characterized in that** the nozzle ring (5) is connected to the inner gas inlet casing (10) in a bearing manner and thus the inner gas inlet casing (10) is fixed relative to the outer gas inlet casing (9) via the nozzle ring (5).

2. Exhaust gas turbine according to Claim 1, **characterized in that** the nozzle ring (5) is connected in a bearing manner to the inner gas inlet casing (10) via a form-fit connection.

3. Exhaust gas turbine according to Claim 2, **characterized in that** the nozzle ring (5) is connected in a bearing manner to the inner gas inlet casing (10) via a screw connection (11).

4. Exhaust gas turbine according to Claim 1, **characterized in that** the nozzle ring (5) is connected in a bearing manner to the inner gas inlet casing (10) via a material-bonded connection.

5. Exhaust gas turbine according to Claim 4, **characterized in that** the nozzle ring (5) is connected in a bearing manner to the inner gas inlet casing (10) via a welded connection (12).

6. Exhaust gas turbine according to Claim 1, **characterized in that** the nozzle ring (5) is connected in a bearing manner to the inner gas inlet casing (10) via a friction-fit connection.

7. Exhaust gas turbine according to Claim 1, **characterized in that** the nozzle ring (5) and the inner gas inlet casing (10) are formed in one piece.

8. Exhaust gas turbine according to Claim 7, **characterized in that** the nozzle ring (5) and the inner gas inlet casing (10) are cast in one piece.

9. Turbocharger having an exhaust gas turbine according to one of Claims 1 to 8 form.

10. Power turbine having an exhaust gas turbine according to one of Claims 1 to 8 form.

## Revendications

1. Turbine à gaz d'échappement comprenant un anneau de tuyère (5) avec des aubes directrices (8), un boîtier d'entrée de gaz extérieur (9) et un boîtier d'entrée de gaz intérieur (10), l'anneau de tuyère (5) étant fixé par rapport au boîtier d'entrée de gaz extérieur (9) indépendamment du boîtier d'entrée de gaz intérieur (10), **caractérisée en ce que** l'anneau de tuyère (5) est connecté au boîtier d'entrée de gaz intérieur (10) en le supportant et de telle sorte que le boîtier d'entrée de gaz intérieur (10) soit fixé par rapport au boîtier d'entrée de gaz extérieur (9) par le biais de l'anneau de tuyère (5).

2. Turbine à gaz d'échappement selon la revendication 1, **caractérisée en ce que** l'anneau de tuyère (5) est connecté au boîtier d'entrée de gaz intérieur (10) en le supportant par le biais d'une connexion par engagement par correspondance de formes.

3. Turbine à gaz d'échappement selon la revendication 2, **caractérisée en ce que** l'anneau de tuyère (5) est connecté au boîtier d'entrée de gaz intérieur (10) en le supportant par le biais d'une connexion vissée (11).

4. Turbine à gaz d'échappement selon la revendication 1, **caractérisée en ce que** l'anneau de tuyère (5) est connecté au boîtier d'entrée de gaz intérieur (10) en le supportant par le biais d'une connexion par engagement par liaison de matière.

5. Turbine à gaz d'échappement selon la revendication 4, **caractérisée en ce que** l'anneau de tuyère (5) est connecté au boîtier d'entrée de gaz intérieur (10) en le supportant par le biais d'une connexion soudée (12).

6. Turbine à gaz d'échappement selon la revendication 1, **caractérisée en ce que** l'anneau de tuyère (5) est connecté au boîtier d'entrée de gaz intérieur (10) en le supportant par le biais d'une connexion par engagement par friction.

7. Turbine à gaz d'échappement selon la revendication 1, **caractérisée en ce que** l'anneau de tuyère (5) et le boîtier d'entrée de gaz intérieur (10) sont réalisés d'une seule pièce.

8. Turbine à gaz d'échappement selon la revendication 7, **caractérisée en ce que** l'anneau de tuyère (5) et le boîtier d'entrée de gaz intérieur (10) sont coulés d'une seule pièce.

9. Turbocompresseur comprenant une turbine à gaz d'échappement selon l'une quelconque des revendications 1 à 8 forment.

10. Turbine de puissance comprenant une turbine à gaz d'échappement selon l'une quelconque des revendications 1 à 8 forment.
